# EUROPEAN PATENT APPLICATION

(11) **EP 4 762 919 A1**
(43) Date of publication of application: **24.06.2026**
(21) Application number: 25214702.0
(22) Date of filing: 10.11.2025
(51) Int. Cl.: A01J 25/06, A01J 25/10, A01J 25/11

(54) **HORIZONTAL CHEESE VAT AND METHOD FOR PROCESSING CURD AND WHEY MIXTURE**

(30) Priority: 20.12.2024 EP 24222266
(71) Applicant: Tetra Laval Holdings & Finance S.A., 1009 Pully (CH)
(72) Inventor: Nijboer, Jan, 8448 GW Heerenveen (NL); Olson, Michael, Winsted, 55395 (US)
(74) Representative: Tetra Pak Patent Attorneys

(57) **Abstract**

A horizontal cheese vat (100) designed for processing a mixture of curd and whey includes a main body (101) featuring both upper and main portions. It houses two sets of knives on parallel horizontal shafts (106, 110). The cheese vat incorporates a whey removal device equipped with a main arm (116) connected to a pipe arrangement in the upper portion and a whey sieve (118). This arm is pivotal around an axis parallel to the shafts, enabling the sieve to transition between an idle position located in the upper portion and a whey removal position within the main portion. This movement facilitates the sieve's passage through a horizontal plane defined by the axes of the shafts, optimizing the process of whey extraction.

## Description

### Technical Field

The present disclosure relates to cheese production. More particularly, the present disclosure relates to horizontal cheese vat for processing a curd and whey mixture, and a method for processing the curd and whey mixture.

### Background

Today it is well known to use a cheese vat for large-scale cheese production. Generally, the cheese vat is provided downstream of milk processing equipment. In this way, milk may be pasteurized, and fat standardized etc before being fed into the cheese vat. Once provided in the cheese vat, a starter culture, such as specific strains of bacteria, is added so that that the milk can develop into a specific cheese type. Rennet is added so the milk coagulates into a curd and whey mixture. Cheese vats may be single shaft or dual shaft and can be provided with knives sets on the shafts. The curd and whey mixture is cut by using the knives set attached to the shafts. Once the curd is cut, the curd and whey mixture is heated at the same time as the curd and whey mixture is stirred. The heating is often performed indirectly by providing hot water into a jacket of the cheese vat.

In some cheese vats, the knives sets are provided with knives having sharp edges facing in one direction and blunt edges facing in the opposite direction. In this way it is made possible to cut the curd and whey mixture by rotating the knives sets in one direction, and to stir the curd and whey mixture by rotating in the opposite direction. In dual shaft cheese vats, the knives sets on each shaft can be counter rotated with respect to each other in one direction to perform stirring and counter rotated with respect to each other in the opposite direction to perform cutting.

For removing whey from the curd and whey mixture, it is known to use a whey removal device utilising a whey sieve. This may be provided in an upper region or upper portion of the cheese vat such that this can be kept away from the knives set during cutting and stirring. During whey removal, the rotation of the knives sets around the shafts can be halted and the whey removal device can be lowered into the curd and whey mixture such that whey can be absorbed into the whey removal device and removed from the curd and whey mixture in the vat. The removed whey may for example be transformed into whey powder.

The prior art successfully provides an efficient way to remove whey from the curd and whey mixture held inside dual shaft cheese vat. However, even though the current solutions are reliable and cost efficient, there is a need to further improve this process.

### Summary

It is an object of the techniques of the disclosure to at least partly overcome one or more of the above-identified limitations of the prior art. In particular, it is an object to provide a dual shaft cheese vat with improved flow rate when removing whey from the curd and whey mixture. A further object is to provide a cheese vat providing increased versatility.

According to a first aspect, there is provided a horizontal cheese vat for processing a curd and whey mixture, the horizontal cheese vat comprising:
a main body for holding the curd and whey mixture, the main body comprising a main portion and an upper portion arranged above the main portion;
a first knives set arranged on a first horizontal shaft extending along a first axis within the main body;
a second knives set arranged on a second horizontal shaft extending along a second axis within the main body, the second axis being substantially parallel to the first axis; and
a whey removal device comprising:
   a pipe arrangement in the upper portion of the main body;
   a main arm comprising a pipe connected to the pipe arrangement; and
   a whey sieve arranged to be placed into the curd and whey mixture, the whey sieve being in fluid communication with the pipe arrangement via the pipe;
   the main arm being rotatable about an arm rotation axis such that the whey sieve can be moved between an idle position where the sieve is positioned in the upper portion of the main body and a whey removal position within the main portion of the main body such that the whey sieve can move to pass through a horizontal plane that extends through both the first axis and the second axis between the first horizontal shaft and the second horizontal shaft,
in which the arm rotation axis is substantially parallel to the first axis and the second axis.

By having the arm rotation axis substantially parallel to the first axis and the second axis, the versatility of layout of the whey sieve with respect to the main body may be improved. Furthermore, surface area of the whey sieve through which whey may be passed may be increased by utilising a greater volume within the main body by being able to provide a longer whey sieve that extends across a greater span within the main body. By having a longer whey sieve provided by this configuration, compared to what is possible in a vat where the axis of rotation of the arm is perpendicular to the rotation axes of the shafts for example, whey may be removed from the vat at a higher speed. Being able to remove the whey at a higher speed helps improve the versatility of the horizontal cheese vat, making it possible to process the curd and whey mixture to provide different cheese types, especially those requiring removal of larger volumes of whey quickly.

The whey sieve may be arranged to be placed into the curd and whey mixture when the first knives set and the second knives set are placed in a parked position.

The first horizontal shaft and the second horizontal shaft may be arranged to counter rotate with respect to each other. On rotation of the first horizontal shaft and the second horizontal shaft, a second knife frame of the first knives set may be arranged to interleave with first knife frames of the second knives set through a gap formed between adjacent first knife frames of the second knives set. The main arm may be arranged to move through the gap formed between the adjacent first knife frames of the second knives set when moving between the idle position and the whey removal position. This may help further increase the regions within the vat that may be accessed by the whey sieve, thus helping to further improve versatility of the vat, and helping to enable the whey sieve to be moved to a lower position within the main body.

Knives of the first knives set may be arranged along a first plane, and knives of the second knives set may be arranged along a second plane. The parked position may correspond to the first plane being substantially parallel to the second plane, and the first plane and the second plane being positioned at a predetermined angle to vertical. By appropriate choice of the predetermined angle the likelihood that the whey sieve may collide with knives of the first or second knives set when moving between the idle position and the whey removal position may be reduced. Further, this may assist the whey sieve in reaching a greater depth into the main portion. Appropriate choice of angle may also help allow some curd of the curd and whey mixture to be held away from the whey removal position by the knives set(s), thus helping to improve extraction of whey through the whey sieve.

The whey sieve may elongatedly extend in a direction substantially parallel to both the first axis and the second axis, which may further help increase regions within the main body of the vat that can be accessed by the whey sieve to remove whey.

The main body may comprise a first cylindrically lobed portion and a second cylindrically lobed portion. The first cylindrically lobed portion may have a radius of curvature that is the same as that of the second cylindrically lobed portion. The first knives set may be rotatable within the first cylindrically lobed portion, and the second knives set may be rotatable within the second cylindrically lobed portion.

A top of the upper portion of the main body may be dome shaped and the top may have a radius of curvature that is greater than the radius of curvature of the first and second cylindrical lobed portions. By having the top dome-shaped and by having its radius of curvature greater than the radius of curvature of the first and second cylindrical lobed portions, this may help withstand mechanical stress and thermal stress more efficiently.

The main arm may be shaped in a plane perpendicular to the arm rotation axis to deviate away from a line extending between the whey sieve and the arm rotation axis so as to pass around the second shaft when the main arm is in the whey removal position. This may help reduce the likelihood of interference between the main arm and the second shaft when the whey sieve is moved to the whey removal position. Further, versatility of design parameters and possible locations of the whey removal position within the main portion of the main body may be improved.

In moving from the idle position to the whey removal position, the line may cross over the second axis of the second shaft. This may help allow the whey sieve to be positioned closer to the bottom of the main portion, thus helping enable efficient whey removal even when lower depths of the curd and whey mixture are present.

The main arm may be arcuate in a plane perpendicular to the arm rotation axis, which may further help reduce the likelihood of interference between the main arm and the second shaft when the whey sieve is moved to the whey removal position, and also provide more versatile vat layout and possible whey removal positions.

The upper portion of the main body may be provided with a first and a second outer side wall, and at least one first and second brace may be provided between an outside of the main portion of the main body and the first and second outer side wall, respectively. By having the braces placed on the outside, a more smooth inside of the vat is achieved, which may help improve cleanability. The braces placed on an outside of the cheese vat may help make the horizontal cheese vat more capable of withstanding mechanical and thermal stress.

According to a second aspect, there is provided a method for processing a curd and whey mixture by using a horizontal cheese vat according to the first aspect, the method comprising:
feeding milk into the main body of the horizontal cheese vat;
feeding rennet into the main body;
cutting the curd and whey mixture formed from the milk and rennet by using the first knives set and the second knives set provided in the main portion of the main body;
stirring the curd and whey mixture; and
removing whey from the curd and whey mixture by parking the first knives set and the second knives set, and moving the whey sieve of the whey removal device from the idle position to the whey removal position in which the whey sieve is positioned within the curd and whey mixture held in the main portion.

The same features and advantages as described above with respect to the first aspect also apply to this second aspect.

Parking the first knives set and the second knives set comprises rotating the second horizontal shaft in a direction so that curd of the curd and whey mixture is pushed away from the whey removal position by the second knives set and then stopping rotation so as to provide a depleted curd region into which the whey sieve is moved. By pushing curd away from the position into which the whey sieve is to be placed, the flow rate through the whey sieve when removing whey may be improved, because curds may be less likely to clog the whey sieve due to there being fewer curds in the depleted curd region.

Other objectives, features, aspects and advantages of the disclosure will be apparent from the following detailed description as well as from the drawings.

### Drawings

Embodiments of the invention will now be described, by way of example, with reference to the accompanying schematic drawings, in which:
Fig. 1a is a perspective view of a horizontal cheese vat viewed from a first position;
Fig. 1b is a perspective view of the cheese vat viewed from a second position;
Fig. 2 is a cross-sectional view of the cheese vat with a whey removal device in an idle state;
Fig. 3 is a cross-sectional view of the cheese vat with the whey removal device in a whey removal state;
Fig 4a is a schematic cross-sectional view of knife frames of a knife set mounted on a horizontal shaft together with the whey removal device in the idle state;
Fig 4b is a schematic cross-sectional view of knife frames of a knife set mounted on the horizontal shaft together with the whey removal device shown in a position between the idle state and the whey removal state;
Fig. 5 is a perspective view of the cheese vat with an external bearing for supporting a pipe arrangement of the whey removal device;
Fig. 6 is a cross-sectional view of the cheese vat as well as a side view of the cheese vat;
Fig. 7a illustrates a side view of a brace in further detail;
Fig 7b illustrates a front view of the brace;
Fig 7c is a cross-sectional view of part of the cheese vat with external braces;
Fig. 8 is a flow chart of a method for processing a curd and whey mixture; and
Fig. 9 schematically illustrates a cheese production line.

### Description

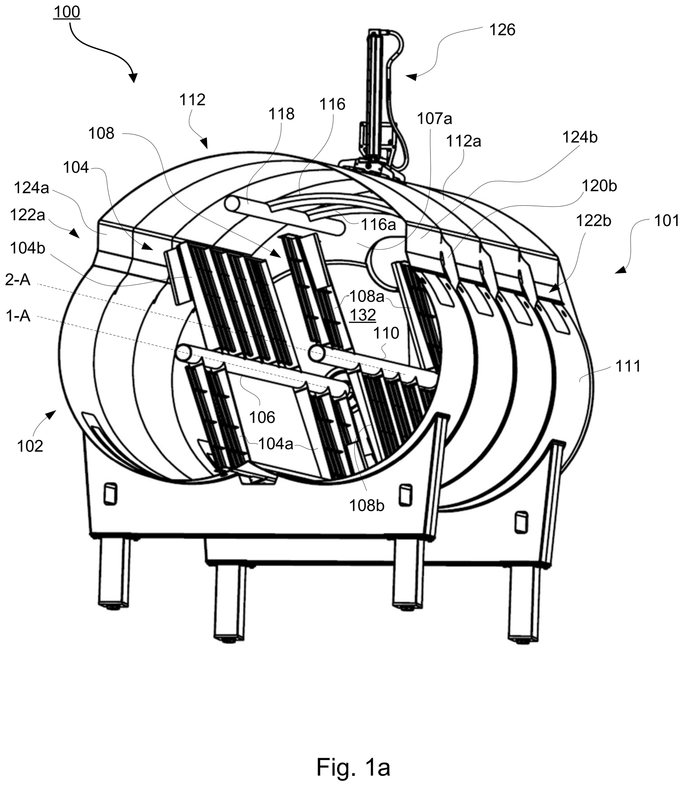

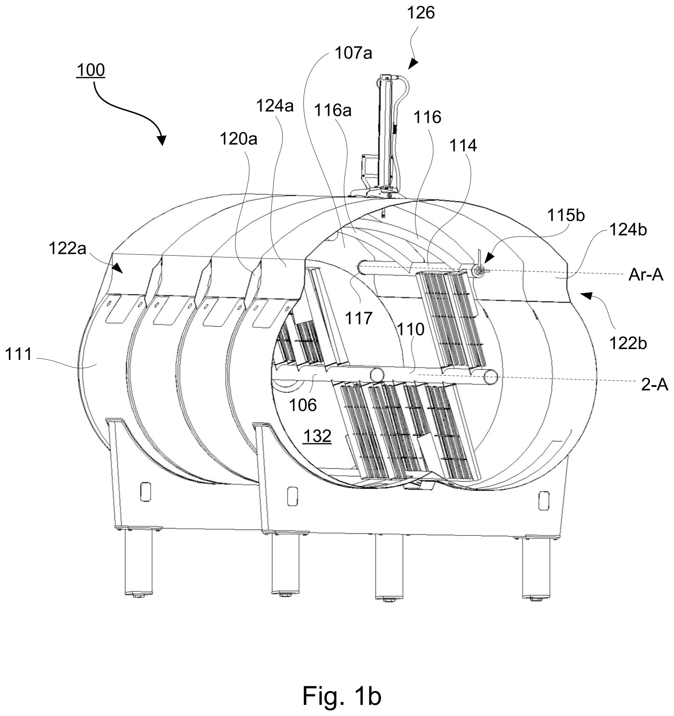

Figs. 1a and 1b illustrate a horizontal cheese vat 100 for processing a curd and whey mixture C-W MIX. The term horizontal cheese vat should be read in the sense that it is a cheese vat that is of a horizontal type, i.e. e.g. not a vertical cheese vat. The word horizontal in this context is thus used to indicate the general direction and type of equipment. In some embodiments the horizontal cheese vat is arranged with a slight angle of 0-10 degrees, preferably 1-4 degrees, to the strict horizontal plane to facilitate draining of the horizontal cheese vat while the horizontal cheese vat is still arranged substantially horizontally.

The cheese vat 100 can comprise a main body 101 for holding the curd and whey mixture C-W MIX. The main body 101 can comprise a main portion 102 and an upper portion 112 arranged above the main portion 102. The main portion 102 and the upper portion 112 can be internally connected to one another such that a closed environment for a curd and whey mixture C-W MIX is formed.

The cheese vat 100 can comprise a first knives set 104 arranged on a first horizontal shaft 106 extending along a first axis 1-A within the main body 102, and a second knives set 108 arranged on a second horizontal shaft 110 extending along a second axis 2-A within the main body 102. The second axis 2-A can be substantially parallel to the first axis 1-A. As used herein in relation to axes being substantially parallel with each other, the term "substantially" should be taken to mean that they are parallel subject to manufacturing tolerances, and preferably an angle of deviation of one axis from true parallel with another axis is less than 2 degrees.

The first knives set 104 and the second knives set 108 can be rigidly fixed to the first shaft 106 and second shaft, respectively, such that rotation of their respective shafts causes the knife sets to rotate about their respective axis 1-A, 2-A within the main portion 102.

The first knives set 104 can comprise first knife frames 104a and a second knife frame 104b extending radially away from the shaft, with the first knife frames 104a extending away from the first horizontal shaft 106 in the opposite direction from the second knife frame 104b.

The knives set 108 of the second horizontal shaft 110 can be arranged in a similar manner to the knives set 104 of the first horizontal shaft 106. In other words, the second knives set 108 can comprise first knife frames 108a and a second knife frame 108b extending radially away from the shaft, with the first knife frames 108a extending radially away from the second horizontal shaft 110 in the opposite direction from the second knife frame 108b.

However, it will be appreciated that more than one knife frame can be provided in an axial direction along the first horizontal shaft 106 and the second horizontal shaft 110. Where gaps are provided between knife frames, in the present examples of the disclosure, those knife frames that are immediately next to each other along the same line can be considered as adjacent knife frames.

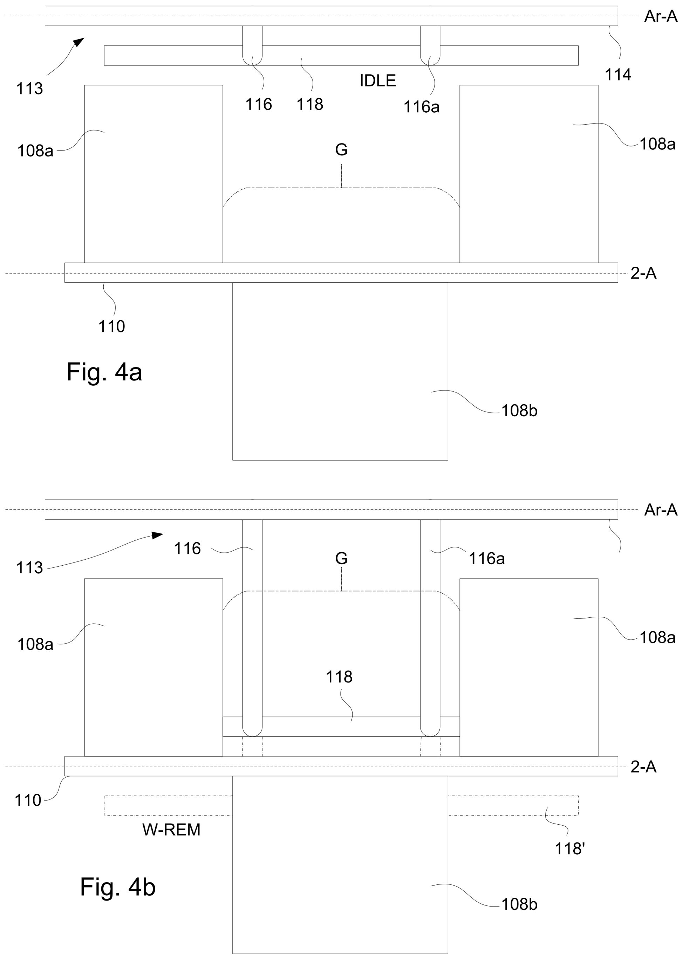

As illustrated in Figures 4a and 4b, a gap G can be formed between the adjacent first knife frames 108a of the second horizontal shaft 110. In this example, the first knife frames can be mounted towards the ends of the second horizontal shaft 110 in the axial direction, and the second knife frame 108b can be mounted towards the middle of the second horizontal shaft, for example positioned over its midpoint in the longitudinal direction.

The first horizontal shaft 106 and the second horizontal shaft 110 can be arranged to counter rotate with respect to each other. A distance between the first horizontal shaft 106 and the second horizontal shaft 110 in a direction perpendicular to their axes of rotation can be shorter than a distance that the knife frames extend away from the shafts in a radial direction.

Accordingly, on rotation of the first horizontal shaft 106 and the second horizontal shaft 110, a second knife frame 104b of the first knives set 104 can be arranged to interleave with the first knife frames 108a of the second knives set 108 into a gap G formed between adjacent first knife frames 108a of the second knives set 108. Similarly, the second knife frame 108b of the second knives set 108 can be arranged to interleave with knife frames 104a of the first knives set 104 into a gap formed between adjacent knife frames 104a of the first knives set 104. In other words, as the knives sets 104,108 counter rotate their respective knife frames pass by each other through respective gaps formed between adjacent knife frames. This may help facilitate efficient stirring and cutting of the curd and whey mixture C-W MIX.

The main portion 102 can be provided with a jacket 111. This may be a socalled dimpled jacket. By feeding in hot water into the jacket 111, or any other heat transfer medium, the curd and whey mixture C-W MIX held in the main portion 102 may be indirectly heated. In a similar manner, cold water may be introduced into the jacket 111 such that the curd and whey mixture C-W MIX can be cooled.

The knife frames 104a,b and 108a,b can be provided with blades. The blades can have one sharp edge and one blunt edge placed opposite the sharp edge so that that the curd and whey mixture C-X MIX can be cut by counter rotating the shafts 106, 110 with respect to each other in one direction, and stirring the curd and whey mixture C-W MIX can be performed by counter rotating the shafts 106,110 with respect to each other in an opposite direction.

The cheese vat 100 can comprise a whey removal device 113 that comprises a pipe arrangement 114, a main arm 116, and a whey sieve 118. The pipe arrangement can be in the upper portion 112 of the main body 101, and the main arm 116 can comprise a pipe connected to the pipe arrangement 114. The whey sieve 118 can be arranged to be placed into the curd and whey mixture C-W MIX and can be in fluid communication with the pipe arrangement 114 via the pipe of the main arm 116. For example, material such as whey can pass from the curd and whey mixture C-W MIX into the whey sieve 118, through the pipe of the main arm 116 and into the pipe arrangement 114 for removal from the vat 100 and for external processing.

The whey sieve can be a sieve-like device provided with openings that, when lowered into the curd and whey mixture C-W MIX, can allow whey W to be absorbed from the mixture. As illustrated, the whey sieve 118 can be connected to the main arm 116 comprising the pipe for transporting whey.

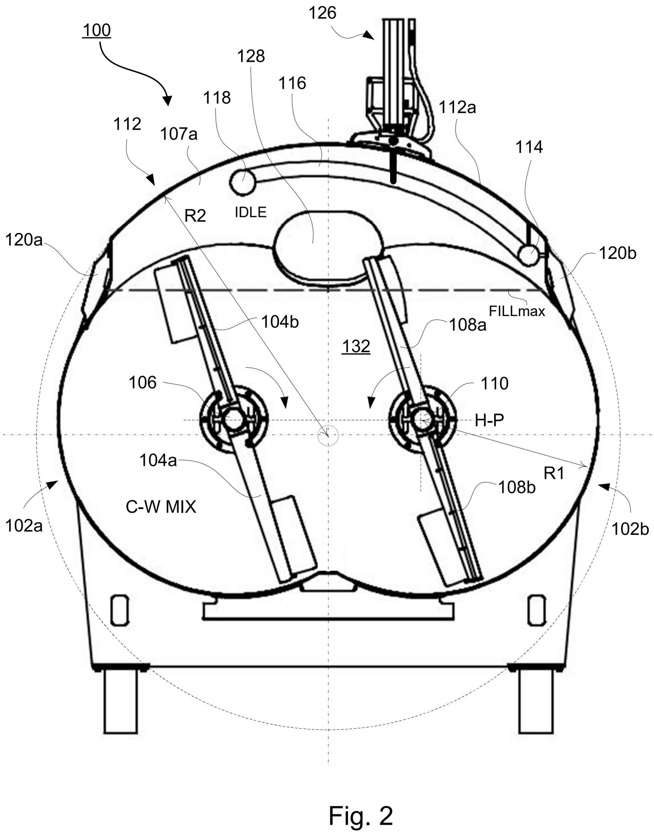

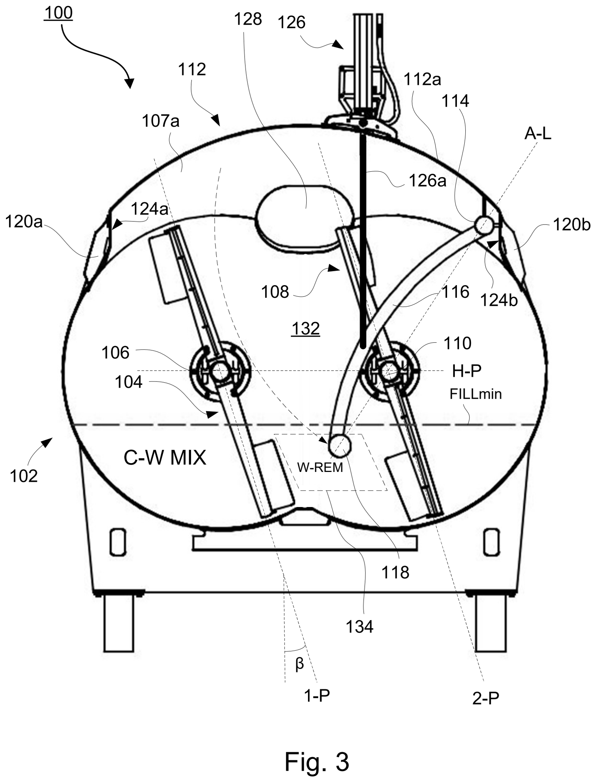

The main arm 116 can be rotatable about an arm rotation axis Ar-A such that the whey sieve 114 can be moved between an idle position IDLE (illustrated in Fig.2) where the sieve is positioned in the upper portion 112 of the main body 101 and a whey removal position W-REM (illustrated in Fig. 3) within the main portion 102 of the main body 101 such that the whey sieve 114 can move to pass through a horizontal plane H-P that extends through both the first axis 1-A and the second axis 2-A between the first horizontal shaft 106 and the second horizontal shaft 110. The arm rotation axis Ar-A can be substantially parallel to the first axis 1-A and the second axis 2-A.

The cheese vat 100 can comprise a first end wall 107a and a second end wall 107b. The first and second end walls 107a,107b can be arranged on opposite ends of the main body 101. The first horizontal shaft 106 and the second horizontal shaft 110 can be arranged to extend between the first end wall 107a and the second end wall 107b within the main portion 102 to be rotatable and supported on suitable bearings.

A manway 128 can be formed in the first end wall 107a, which is a hole formed in the first end wall 107 that allows access into the main body 101, for example for cleaning or maintenance. The manway 128 may alternatively be formed in the second end wall 107b. More than one manway may be provided. The manway 128 can be covered with a hatch to provide a closed environment within the main body 101, for example when processing the curd and whey mixture C-W MIX.

A maximum fill level FILLmax of the main portion 102 is illustrated in Fig. 2. This is the highest level within the main portion 102 that the curd and whey mixture C-W MIX should be filled up to and remain within correct operational parameters, and corresponds with a bottom edge of the manway 128.

A minimum operational fill level FILLmin of the main portion 102 is illustrated in Fig. 3. The minimum operational fill level FILLmin corresponds with the lowest fill level of curds and whey mixture C-W MIX within the main portion that still allows the whey sieve 118 to be placed into the curds and whey mixture C-W MIX such that the whey sieve 118 is completely submerged in the curds and whey mixture C-W MIX. A lower minimum operational fill level FILLmin can help improve the versatility of the vat 100 by allowing a greater variance in volume between the maximum fill level FILLmax and the minimum operational fill level FILLmin, and so provide a greater versatility and efficiency in using the vat for different processing operations.

As mentioned above, the arm rotation axis Ar-A is substantially parallel to the first and second axes 1-A, 2-A. By having the arm rotation axis Ar-A substantially parallel to the first and second axes 1-A, 2-A, a whey sieve that can extend along a greater proportion of interior length of the main body in the axial direction can be provided, thus providing greater surface area of the sieve for removing whey. This may help provide an improved flow rate when removing whey from the main body 101.

Furthermore, by having the main arm 116 being rotatable such that the whey sieve 114 can move to pass through the horizontal plane H-P, a whey sieve with greater capacity may be provided that can also be positioned further down into the main portion 102 when removing whey. Furthermore, the minimum operational fill level FILLmin can be made to be lower within the main portion 102. This may help provide a cheese vat that has a greater versatility for providing varied different processing methods of the curd and whey mixture.

As illustrated in Fig. 3, the whey sieve 118 can be arranged to be placed into the curd and whey mixture C-W MIX when the first knives set 104 and the second knives set 108 are placed in a parked position. The parked position can correspond to a position of the first and second knives sets 104, 108 when rotation of the first and second horizontal shafts 106,110 is stopped.

The whey sieve 118 can be caused to move between the idle position IDLE and the whey removal position W-REM by an arm actuator 126 that comprises an arm actuator rod 126a coupled to the main arm 116, and that acts between the main arm 116 and a top 112a of the upper portion 112 to raise and lower the whey sieve 118 within the main body 101. During rotation of the knives sets 104,108, such as during cutting and stirring, the whey removal device 113 may be held in the idle position IDLE within the upper portion 112 by the arm actuator 126 so as to be out of the way of the knives sets and not interfere with their rotation.

The main portion 102 can comprise a first cylindrically lobed portion 102a and a second cylindrically lobed portion 102b. The first cylindrically lobed portion 102a can have a radius of curvature R1 that is the same as that of the second cylindrically lobed portion 102b. The first knives set 104 can be rotatable within the first cylindrically lobed portion 102a, and the second knives set 108 can be rotatable within the second cylindrically lobed portion 102b. The first knives set 104 and the second knives set 108, although not illustrated in Figs. 2 and 3, may have a length that is substantially equal to the first radius R1, more particularly slightly less than the first radius R1, such that the curd and whey mixture C-W MIX can be cut and stirred efficiently.

The top 112a of the upper portion 112 of the main body 101 can be dome shaped. The top 112a can have a radius of curvature R2 that is greater than the radius of curvature R1 of the first and second cylindrical lobed portions 102a, 102b. By having the top 112a dome-shaped and by having its radius of curvature R2 greater than the radius of curvature R1 of the first and second cylindrical lobed portions 102a, 102b, this may help withstand mechanical stress and thermal stress efficiently.

As illustrated in Fig. 3, knives of the first knives set 104 can be arranged along a first plane 1-P, and knives of the second knives set 108 can be arranged along a second plane 2-P. The parked position can correspond to the first plane 1-P being substantially parallel to the second plane 2-P and the first plane 1-P and the second plane 2-P being positioned at a predetermined angle β to vertical. In this context, substantially parallel is taken to be less than a predetermined angular deviation from each other, preferably less than 10 degrees, more preferably less than 2 degrees, subject to any backlash, play, slop or hysteresis that may occur when changing between clockwise and anti-clockwise rotation of the shafts 106, 110.

By appropriate choice of the predetermined angle β, the likelihood that the whey sieve may collide with knives of the first or second knives set when moving between the idle position IDLE and the whey removal position W-REM may be reduced. Further, this may assist the whey sieve 118 in reaching a greater depth into the main portion 102, thus allowing the minimum operational fil level FILLmin to be lower and increasing versatility and flexibility of vat usage.

Appropriate choice of the angle β may also help allow some curd of the curd and whey mixture to be held away from the whey removal position by the knives sets 104,108, thus helping to improve extraction of whey through the whey sieve. The predetermined angle β can preferably be between 5 to 20 degrees, such as 15 degrees, 10 degrees, or 5 degrees, and could be chosen for example based on desired geometry and necessity to ensure clearance for the whey sieve 118.

The whey sieve 118 can elongatedly extend in a direction substantially parallel to both the first axis 1-A and the second axis 2-A. In other words, the whey sieve 118 can be configured to extend in an axial (longitudinal direction) of the horizontal cheese vat 100. Accordingly, the cheese vat 100 can be provided with a whey sieve 118 that can have higher capacity and flow rate than previous whey sieves, by being able to be made to span across a greater proportion of the main body 101.

Fig 4a shows a schematic cross-sectional view of the knife frames 108a,b of the second knives set 108 mounted on the second horizontal shaft 110 together with the whey removal device 113 in the idle state where it is in the idle position IDLE. Fig 4b shows a schematic cross-sectional view of the knife frames 108a,b of the second knives set 108 mounted on the second horizontal shaft 110 together with the whey removal device 113 shown in a position between the idle state and the whey removal state.

In Fig. 4b, the knives set 108 is shown in the parked position. As mentioned above, the gap G is formed between adjacent first knife frames 108a of the second knives set 108. In other words, the first knife frames 108a of the second knives set 108 may be spaced apart from each in the longitudinal (axial) direction along the second horizontal shaft 110 so as to form the gap G between them.

The whey sieve 118 is shown in a position that is between the idle position IDLE and the whey removal position W-REM (indicated by 118' and the dashed outline in Fig. 4b), for example as may occur when lowering or raising the whey sieve 118 into or out of the curds and whey mixture C-W MIX.

The main arm 116 can be arranged to move through the gap G formed between the adjacent first knife frames 108a of the second knives set 108 when moving between the idle position IDLE and the whey removal position W-REM. Accordingly, when the knives sets 104,108 are in the parked position, this may allow the whey sieve 118 to have an improved range of motion with the main portion 102 without the knives sets 104,108 interfering with movement of the main arm 116.

The whey removal device 113 can comprise an auxiliary arm 116a spaced apart from the main arm 116 along the longitudinal direction of the whey sieve 118 i.e. in the longitudinal direction of the main body 101. By providing an auxiliary arm 116a, stability and torsional rigidity of the whey sieve with respect to the pipe arrangement 114 may be improved. More than one auxiliary arm may be provided to help further improve rigidity. The auxiliary arm 116a can have the same shape and configuration as the main arm 116.

Alternatively, the auxiliary arm 116a may be omitted, so helping to provide a lighter whey removal device 113 and helping to reduce inertial mass when moving the whey sieve 118. If the auxiliary arm 116a is omitted, the main arm 116 may be mounted to coincide with a balance point along the whey sieve 118 in the longitudinal direction.

Referring back to Fig. 3, the main arm 116 can be shaped in a plane perpendicular to the arm rotation axis Ar-R to deviate away from a line A-L that extends between the whey sieve 118 and the arm rotation axis Ar-R so as to pass around the second horizontal shaft 110 when the main arm 116 is in the whey removal position W-REM. The line A-L can be thought of as lying in a plane that extends along the arm rotation axis Ar-R and through a longitudinal axis of the whey sieve 118. This configuration of the main arm 116 can, for example, help reduce the likelihood that the main arm 116 interferes or collides with the second horizontal shaft 110 or any associated shaft structure when the main arm 116 is moving within the main portion 102.

In moving from the idle position IDLE to the whey removal position W-REM, the line A-L can cross over the second axis 2-A of the second shaft 110. This can help allow the whey sieve 118 to have a greater range of motion within the main body 101 as well as allowing it to reach lower within the main portion 102. Accordingly, the minimum operational fill level FILLmin can also be lower, thus helping improve flexibility and versatility of operation during processing using the vat 100.

As illustrated in Figs. 2 and 3, the main arm 116 can be arcuate in a plane perpendicular to the arm rotation axis Ar-R. This can help provide a smoother surface of the arm with no sharp corners along the main arm 116, thus helping to improve cleanability.

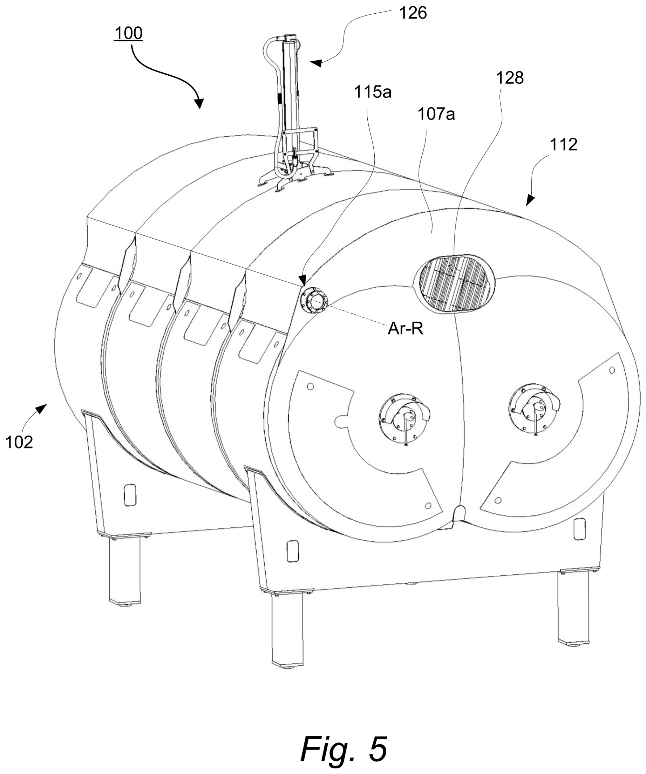

Fig. 5 is a perspective view of the cheese vat 100 with an external bearing 115a for supporting the pipe arrangement 114 of the whey removal device 113. As mentioned above, the main arm can be rotatable about the arm rotation axis Ar-R so it can move between the idle position IDLE and the whey removal position W-REM. The main arm 116 can be rigidly fixed to the pipe arrangement 114 such that, as the main arm 116 is rotated about the arm rotation axis Ar-R, for example by the arm actuator 126, the pipe arrangement 114 also rotates concentrically with the arm rotation axis Ar-R. The pipe arrangement 114 can pass through a hole 117 (illustrated in Fig. 1b) formed in the first end wall 107a to outside the main body 101 so as to allow whey passing through the pipe of the main arm 118 to be transported to outside the cheese vat 100 for processing. The pipe arrangement 114 may be connected to external processing equipment or further pipe arrangements by a suitable rotational or flexible coupling.

To support the rotation of the pipe arrangement 114, the cheese vat 100 can be provided with an external bearing 115a that is concentric with the hole 117 through which the pipe arrangement 114 passes. The external bearing 115a can be mounted on an exterior surface of the first end wall 107a in the upper portion 112.

An interior surface of the second end wall 107b can be provided with an internal bearing 115b (illustrated in Fig. 1b) mounted in the upper portion 112 to support an end of the pipe arrangement 114 opposite the first end wall 107a in the longitudinal direction. In other words, the pipe arrangement 114 can be supported by the internal bearing 115a at one end near the second end wall 107b and pass through the first end wall 107a and supported by the external bearing 115a on the exterior of the first end wall 107a to allow rotation of the pipe arrangement 114 when the whey sieve 118 is moved between the idle position IDLE and the whey removal position W-REM.

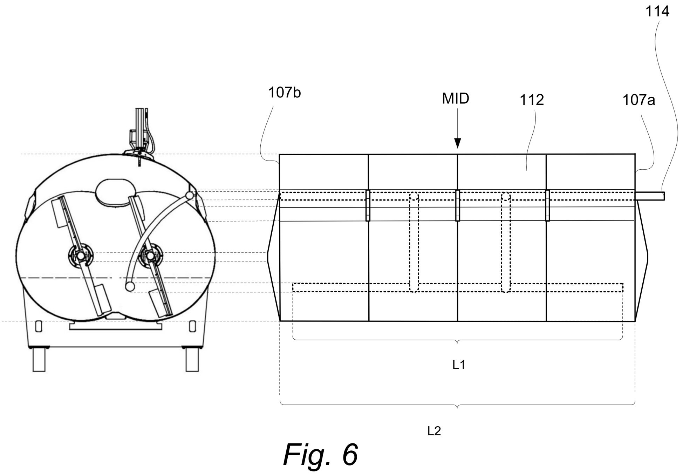

As illustrated in Fig. 6, a length L1 of the whey sieve 118 may be at least 50% of a length L2 of the cylindrically lobed portions 102a,b of the main portion 102, preferably at least 75% of the length L2. Further, the whey sieve 118 may also extend over a mid-point MID of the main body 101, or more particularly the cylindrically lobed portions 102a,b of the main portion 102.

With reference to Figures 1a and 1b, to help increase whey removal capacity and improve cleanabililty, first and second braces 120a,b can be provided externally. To assure that mechanical as well as thermal stress can be handled efficiently, it has been found that first and second indents 122a,b can be provided in transition areas between the main portion 102 and the upper portion 112. The first and second indents 122a,b can be formed by having a first and second outer side walls 124a,b of the upper body 104 inclined towards a center of the cheese vat 100. In other words, the first and second outer side walls 124a,b of the upper portion 112 can be inclined towards the main portion 102 such that first and second indents 122a,b are formed between the upper portion 112 and the main portion 102. The at least one first and second braces 120a,b can be placed in the first and second indents 122a,b respectively.

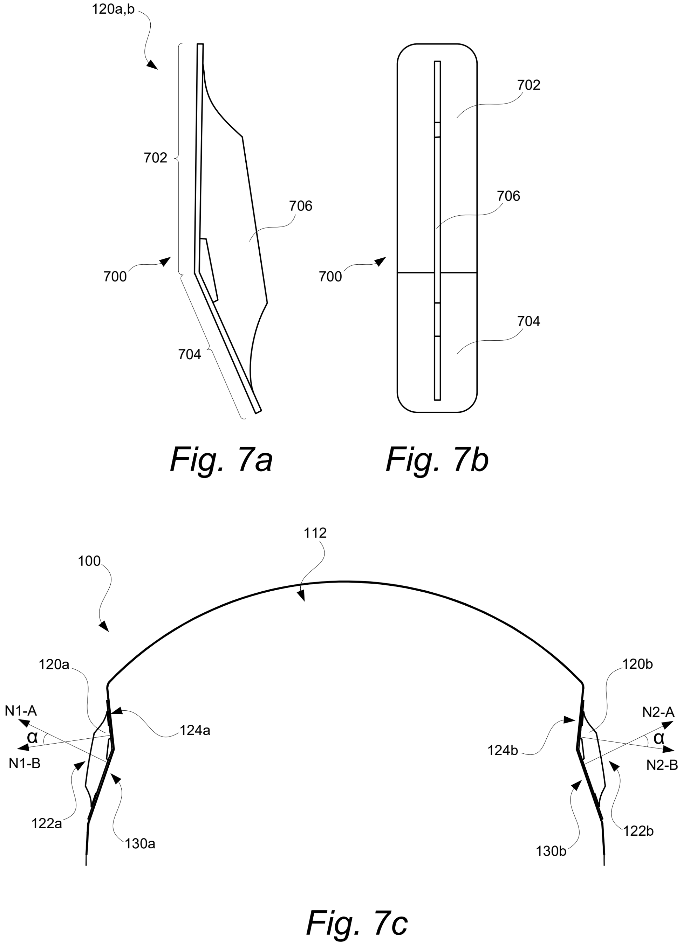

Figures 7a, 7b and 7c illustrate further features of the braces and their relation to the cheese vat 100. In particular, Figures 7a and 7b illustrate the first and second brace 120a,b in further detail and by way of example. In this particular example, the brace 120a,b comprises a doubling plate 700 in turn comprising a first portion 702 configured for attachment to the first or second outer side wall 124a,b of the upper portion 112 and a second portion 704 configured for attachment to the outside of the main portion 102. Further, a load bearing member 706 can be attached to the first and second portion 702, 704 of the doubling plate 700 such that mechanical as well as thermal stress can be handled. As illustrated, the load bearing member 706 can comprise a plate perpendicularly arranged with respect to the first and second portion 702, 704.

With reference to Figure 7c, first and second flat portions 130a,b can be provided on the main portion 102. By having these flat portions 130a,b and also having flat outer side walls 124a,b of the upper portion 112, the braces 120a,b can easily be mounted on the cheese vat 100. The first indent 122a may be formed by the first outer side wall 120a of the upper portion 112 and the first flat portion 130a of the main portion 102, and the second indent 122b may be formed by the second outer side wall 120b of the upper portion 112 and the second flat portion 130b of the main portion 102.

In other words, the main portion 102 can be provided with a first cylindrically lobed portion 102a and a second cylindrically lobed portion 102b. A first flat portion 130a can be arranged above the first cylindrically lobed portion 102a and attached to the first outer side wall 124a of the upper portion 112, and a second flat portion 130b can be arranged above the second cylindrically lobed portion 102b and attached to the second side wall 124b of the upper portion 112. The first and second indents 122a,b can be formed by the first flat portion 130a and the first outer side wall 124a, and by the second flat portion 130b and the second outer side wall 124b, respectively.

An angle α between a normal vector N-1A of the first flat portion 130a and a normal vector N-1B of the first outer side wall 124a may be 15 to 50 degrees. This may also hold true for the angle α between a normal vector N-2A of the second flat portion 130b and a normal vector N-2B of the second outer side wall 124b. In other words, the angle α between the normal vector N-1A of the first flat portion 130a and the normal vector N-1B of the first outer side wall 124a as well as the angle α between the normal vector N-2A of the second flat portion 130b and the normal vector N-2B of the second outer side wall 124b can be 15 to 50 degrees.

A positive effect of having the braces 120a,b placed outside the cheese vat 100, or, put differently using external braces, is that an interior 132 of the cheese vat 100 can be void of braces. By not having internal braces, there is reduced risk of having milk residues in corner areas formed between the internal braces and an inside of the cheese vat 100. As an effect, less time, less water and less cleaning agents may be needed for cleaning the vat 100.

A further positive effect of having the external braces, instead of internal braces, is that there is more room made available for the whey strainer 114. As illustrated, the whey sieve 118 may extend in a longitudinal direction of the horizontal cheese vat 100 which may be substantially parallel with a first rotation axis 1-A and second rotation axis 2-A. Since the length of the whey sieve 118 corresponds to the capacity with which whey can be removed, having the braces 120a,b placed on the outside of the cheese vat 100 helps improve the whey removal capacity. Since producing cheese is dependent on a number of different parameters, the increased whey removal capacity has a direct impact on which types of cheeses that can be produced in the cheese vat 100. In other words, by having the braces 120a,b placed on the outside of the vat 100, the versatility of the cheese vat 100 can be improved.

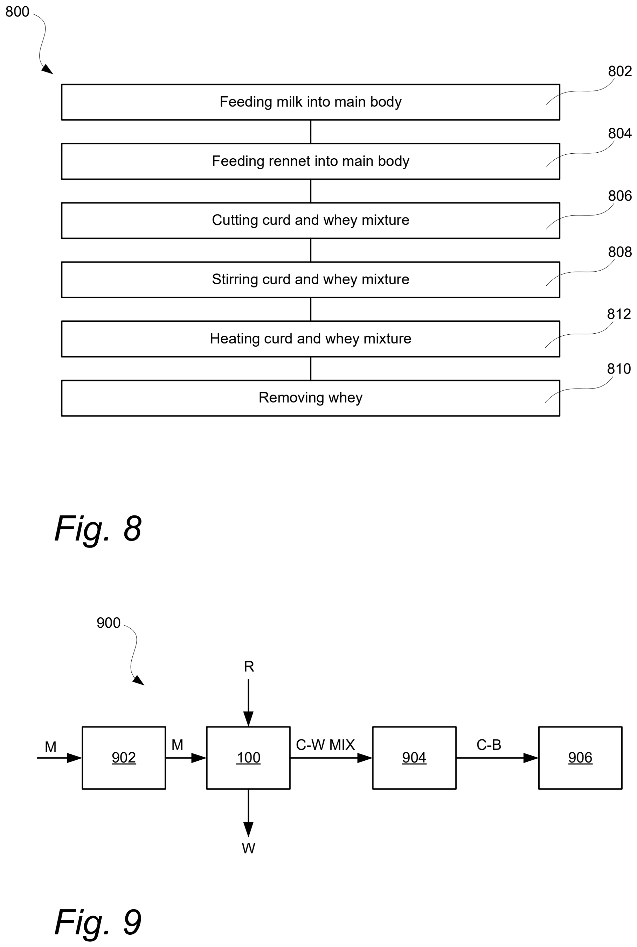

Fig. 8 is a flowchart illustrating a method 800 for processing the curd and whey mixture C-W MIX by using the cheese vat 100. The method can comprise feeding 802 milk M into the main body 101 of the cheese vat 100, feeding 804 rennet R into the main body 102, cutting 806 the curd and whey mixture C-W MIX formed from the milk and rennet by using the first knives set 104 and the second knives set 108 provided in the main portion 102 of the main body 101, stirring 808 the curd and whey mixture C-W MIX, removing 810 whey W from the curd and whey mixture C-W MIX by parking the first knives set 104 and the second knives set 108, and moving and moving the whey sieve 118 of the whey removal device 113 from the idle position IDLE to the whey removal position W-REM in which the whey sieve 118 is positioned within the curd and whey mixture C-W MIX held in the main portion 102.

In parking the first knives set 104 and the second knives set 108, the method can comprise parking 812 the first knives set 104 and the second knives set 108 by rotating the second horizontal shaft 110 in a direction so that curd of the curd and whey mixture C-W MIX is pushed away from the whey removal position W-REM by the second knives set 108 and then stopping rotation so as to provide a depleted curd region 134 into which the whey sieve 118 is moved.

For example, anti-clockwise rotation of the second horizontal shaft 110 and clockwise rotation of the first horizontal shaft 106 (as viewed form the second end wall 107b to the first end wall 107a) can cause their respective knives sets 104, 108 to push some curds of the curd and whey mixture C-W MIX away from the area into which the whey sieve is to be lowered. Once rotation is stopped and the first and second knives sets 104, 108 are parked, their respective knife frames may act to hold some of the curds away from the position into which the whey sieve 118 is to be lowered, thus forming the depleted curd region 134.

More specifically, in rotating the second horizontal shaft 110 in an anticlockwise direction (as viewed form the second end wall 107b to the first end wall 107a), the knife frame 108b can push some curds of the curd and whey mixture C-W MIX away from the area into which the whey sieve 118 is to be lowered, and once parked, the knife frame 108b can act to restrict some curds from moving back towards to the curd depleted region 134. Similarly, in rotating the first horizontal shaft 106 in an clockwise direction (as viewed form the second end wall 107b to the first end wall 107a), the knife frames 104a can push some curds of the curd and whey mixture C-W MIX away from the area into which the whey sieve 118 is to be lowered, and once parked, the knife frames 104a can act to restrict some curds from moving back towards to the curd depleted region 134.

The curd depleted region 134, although illustrated schematically in Figure 3, can therefore, for example, be thought of as being a region of the curds and whey mixture C-W MIX that is between the knives sets 104, 108 of the first and second horizontal shafts 106, 110, a surface of the surds and whey mixture C-W MIX and the bottom of the main portion 102 when the knives sets are parked.

By provision of the knives sets 104, 108 holding some of the curds away from the whey removal position W-REM, this can help to improve flow rate of rate through the whey removal device 113 when in operation because the curds can be less likely to clog openings formed in the whey sieve 118 through which the whey passes when the whey removal device 113 is in operation. Preferably, as mentioned above, the parking position of the knives sets 104, 108 corresponds to having their planes inclined at between 5-20 degrees to vertical, which has been found to further assist in holding curds away from the whey removal position W-REM to form the depleted whey region 134, thus further helping improve flow rate of whey removal, and improving versatility of the cheese vat 100.

In addition, the method 800 can also comprise heating the curd and whey mixture C-W MIX via a heat transfer medium provided in the jacket 110 provided on at least part of the main body 102.

Fig. 9 illustrates schematically a cheese production line 900. This can comprise milk treatment equipment 902, such as a heat treatment apparatus, the cheese vat 100 described above, draining and pressing equipment 904 for removing additional whey W from the curd and whey mixture C-W MIX and for forming curd blocks C-B, and brining equipment 906 for brining the curd blocks C-B.

Although in the foregoing description the whey removal position W-REM has been shown as corresponding to the lowest position that the whey sieve 118 can be moved to within the main body 101, it will be appreciated that whey removal via the whey sieve 118 can be carried out as long as the whey sieve 118 is submerged in the curds and whey mixture C-W MIX. In other words, for example, whey removal can be performed with the whey sieve 118 located anywhere between the lowest position that it can placed at within the main body 101, and the surface of the curds and whey mixture C-W MIX, for example based on desired operation of the cheese vat 100.

From the description above follows that, although various embodiments of the invention have been described and shown, the invention is not restricted thereto, but may also be embodied in other ways within the scope of the subject-matter defined in the following claims.

## Claims

1. A horizontal cheese vat (100) for processing a curd and whey mixture (C-W MIX), the horizontal cheese vat (100) comprising:
a main body (101) for holding the curd and whey mixture (C-W MIX), the main body (101) comprising a main portion (102) and an upper portion (112) arranged above the main portion (102);
a first knives set (104) arranged on a first horizontal shaft (106) extending along a first axis (1-A) within the main body (102);
a second knives set (108) arranged on a second horizontal shaft (110) extending along a second axis (2-A) within the main body (102), the second axis (2-A) being substantially parallel to the first axis (1-A); and
a whey removal device (113) comprising:
a pipe arrangement (114) in the upper portion (112) of the main body (101);
a main arm (116) comprising a pipe connected to the pipe arrangement (114); and
a whey sieve (118) arranged to be placed into the curd and whey mixture (C-W MIX), the whey sieve (118) being in fluid communication with the pipe arrangement (114) via the pipe;
the main arm (116) being rotatable about an arm rotation axis (Ar-A) such that the whey sieve (114) can be moved between an idle position (IDLE) where the sieve is positioned in the upper portion (112) of the main body (101) and a whey removal position (W-REM) within the main portion (102) of the main body (101) such that the whey sieve (114) can move to pass through a horizontal plane (H-P) that extends through both the first axis (1-A) and the second axis (2-A) between the first horizontal shaft (106) and the second horizontal shaft (110),
in which the arm rotation axis (Ar-A) is substantially parallel to the first axis (1-A) and the second axis (2-A).

2. The horizontal cheese vat (100) according to claim 1, in which the whey sieve (118) is arranged to be placed into the curd and whey mixture (C-W MIX) when the first knives set (104) and the second knives set (108) are placed in a parked position.

3. The horizontal cheese vat (100) according to claim 2, in which:
the first horizontal shaft (106) and the second horizontal shaft (110) are arranged to counter rotate with respect to each other;
on rotation of the first horizontal shaft (106) and the second horizontal shaft (110), a second knife frame (104b) of the first knives set (104) is arranged to interleave with first knife frames (108a) of the second knives set (108) through a gap (G) formed between adjacent first knife frames (108a) of the second knives set (108); and
the main arm (116) is arranged to move through the gap (G) formed between the adjacent first knife frames (108a) of the second knives set (108) when moving between the idle position (IDLE) and the whey removal position (W-REM).

4. The horizontal cheese vat (100) according to claim 2 or claim 3, in which:
knives of the first knives set (104) are arranged along a first plane (1-P);
knives of the second knives set (108) are arranged along a second plane (2-P); and
the parked position corresponds to the first plane (1-P) being substantially parallel to the second plane (2-P), and the first plane (1-P) and the second plane (2-P) being positioned at a predetermined angle (β) to vertical.

5. The horizontal cheese vat (100) according to any preceding claim, in which the whey sieve (118) elongatedly extends in a direction substantially parallel to both the first axis (1-A) and the second axis (2-A).

6. The horizontal cheese vat (100) according to any preceding claim, in which:
the main portion (102) comprises a first cylindrically lobed portion (102a) and a second cylindrically lobed portion (102b), the first cylindrically lobed portion (102a) having a radius of curvature (R1) that is the same as that of the second cylindrically lobed portion (102b);
the first knives set (104) is rotatable within the first cylindrically lobed portion (102a); and
the second knives set (108) is rotatable within the second cylindrically lobed portion (102b).

7. The horizontal cheese vat (100) according to claim 6, in which a top (112a) of the upper portion (112) of the main body (101) is dome shaped and the top (112a) has radius of curvature (R2) that is greater than the radius of curvature (R1) of the first and second cylindrical lobed portions (102a, 102b).

8. The horizontal cheese vat (100) according to any preceding claim, in which the main arm (116) is shaped in a plane perpendicular to the arm rotation axis (Ar-R) to deviate away from a line (A-L) extending between the whey sieve (118) and the arm rotation axis (Ar-R) so as to pass around the second horizontal shaft (110) when the main arm (116) is in the whey removal position (W-REM).

9. The horizontal cheese vat (100), in which, in moving from the idle position (IDLE) to the whey removal position (W-REM), the line (A-L) can cross over the second axis (2-A) of the second shaft (110).

10. The horizontal cheese vat (100) according to any preceding claim, in which the main arm (116) is arcuate in a plane perpendicular to the arm rotation axis (Ar-R).

11. The horizontal cheese vat (100) according to any preceding claim, in which:
the upper portion (112) of the main body (101) is provided with a first and a second outer side wall (124a,b); and
at least one first and second brace (120a,b) are provided between an outside of the main portion (102) of the main body (101) and the first and second outer side wall (124a,b), respectively.

12. A method (800) for processing a curd and whey mixture (C-W MIX) by using a horizontal cheese vat (100) according to any of claims 1 to 11, the method comprising:
feeding (802) milk (M) into the main body (101) of the horizontal cheese vat (100);
feeding (804) rennet (R) into the main body (101);
cutting (806) the curd and whey mixture (C-W MIX) formed from the milk and rennet by using the first knives set (104) and the second knives set (108) provided in the main portion (102) of the main body (101);
stirring (808) the curd and whey mixture (C-W MIX); and
removing (810) whey (W) from the curd and whey mixture (C-W MIX) by parking the first knives set (104) and the second knives set (108), and moving the whey sieve (118) of the whey removal device (113) from the idle position (IDLE) to the whey removal position (W-REM) in which the whey sieve (118) is positioned within the curd and whey mixture (C-W MIX) held in the main portion (102).

13. A method according to claim 12, in which parking the first knives set (104) and the second knives set (108) comprises rotating the second horizontal shaft (110) in a direction so that curd of the curd and whey mixture (C-W MIX) is pushed away from the whey removal position (W-REM) by the second knives set (108) and then stopping rotation so as to provide a depleted curd region into which the whey sieve (118) is moved.
